Europäisches Patentamt

European Patent Office

Office européen des brevets

(11) Veröffentlichungsnummer: **0 310 748**
**A1**

(12) **EUROPÄISCHE PATENTANMELDUNG**

(21) Anmeldenummer: **88106711.0**

(22) Anmeldetag: **27.04.88**

(51) Int. Cl.4: **G01F 23/22**

(30) Priorität: **07.10.87 DE 3733858**

(43) Veröffentlichungstag der Anmeldung:
**12.04.89 Patentblatt 89/15**

(84) Benannte Vertragsstaaten:
**DE FR GB IT**

(71) Anmelder: **VDO Adolf Schindling AG**
**Gräfstrasse 103**
**D-6000 Frankfurt/Main 90(DE)**

(72) Erfinder: **Sander, Hans-Georg**
**Eichwaldstrasse 13**
**D-4600 Dortmund 13(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Einrichtung zum Erfassen der Füllstandshöhe in Flüssigkeitsbehältern.**

(57) Es wird eine Einrichtung zum Erfassen der Füllstandshöhe in Flüssigkeitsbehältern angegeben. Die Einrichtung umfaßt einen mäanderförmig ausgebildeten Widerstand (2) auf einer Trägerfolie (1), die im Innenbogen wenigstens eines Mäanders geschlitzt und quer zur Haupterstreckungsrichtung (6) der Widerstandsbahn um 180° gefaltet ist. Bevorzugt erstreckt sich die Widerstandsbahn (2) hauptsächlich in der späteren Meßrichtung, während die Fließrichtung des Mäanders quer dazu gerichtet ist. Durch den Faltvorgang vervielfacht sich die Meßlänge im Vergleich zur Ausgangsgröße (H) der Trägerfolie (1).

Fig.1

## Einrichtung zum Erfassen der Füllstandshöhe in Flüssigkeitsbehältern

Die Erfindung betrifft eine Einrichtung zum Erfassen der Füllstandshöhe in Flüssigkeitsbehältern nach der Gattung des Hauptanspruchs.

Es ist bereits eine Einrichtung zum Erfassen der Füllhöhe in Flüssigkeitsbehältern bekannt, die einen elektrisch beheizten Fühler ausweist, dessen füllhöhen-abhängige Widerstandsänderung zur Anzeige gebracht wird. Der bekannte Fühler ist nach Art einer flexiblen Leiterplatte aus einer Trägerfolie mit darauf angeordneter Widerstandsbahn und Leiterbahnen aufgebaut. Zur Erhöhung des Gesamtwiderstandes ist die Widerstandsbahn mäanderförmig ausgebildet.

Die Meßlänge einer solchen Füllstandsmeßeinrichtung mit Widerstandsfühler ist durch die Länge der Trägerfolie mit darauf angebrachter Widerstandsbahn bestimmt. Mit den bekannten Herstellverfahren, insbesondere mit photolithographischen und drucktechnischen Prozessen, lassen sich nur Folienwiderstände begrenzter Abmessungen herstellen. In vielen Zweigen der Technik, beispielsweise im Anlagenbau, besteht jedoch ein Bedarf an Füllstandsmeßeinrichtungen, deren Meßlänge ein Vielfaches dieser durch die bekannten Herstellverfahren begrenzten Länge beträgt.

Der Erfindung liegt daher die Aufgabe zugrunde, eine Einrichtung zum Erfassen der Füllstandshöhe nach dem Gattungsbegriff so weiterzubilden, daß die Herstellung von Widerstandsfühlern von praktisch beliebiger Länge möglich ist.

Die Lösung dieser Aufgabe erfolgt mit den im kennzeichnenden Teil des Patentanspruchs angegebenen Maßnahmen. Dabei ist vorteilhaft, daß bekannte und beherrschbare Herstellverfahren in vollem Umfang beibehalten werden können. Weiter ist vorteilhaft, daß kein zusätzlicher Fertigungsschritt erforderlich ist.

Vorteilhafte Weiterbildungen und Ausgestaltungen der erfindungsgemäßen Einrichtung zum Erfassen der Füllstandshöhe in Flüssigkeitsbehältern ergeben sich aus den Unteransprüchen.

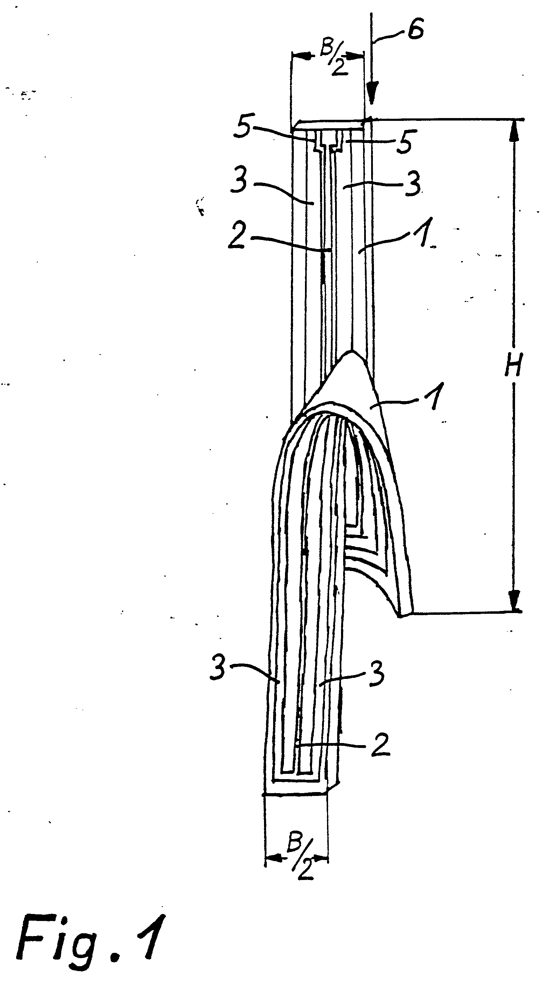

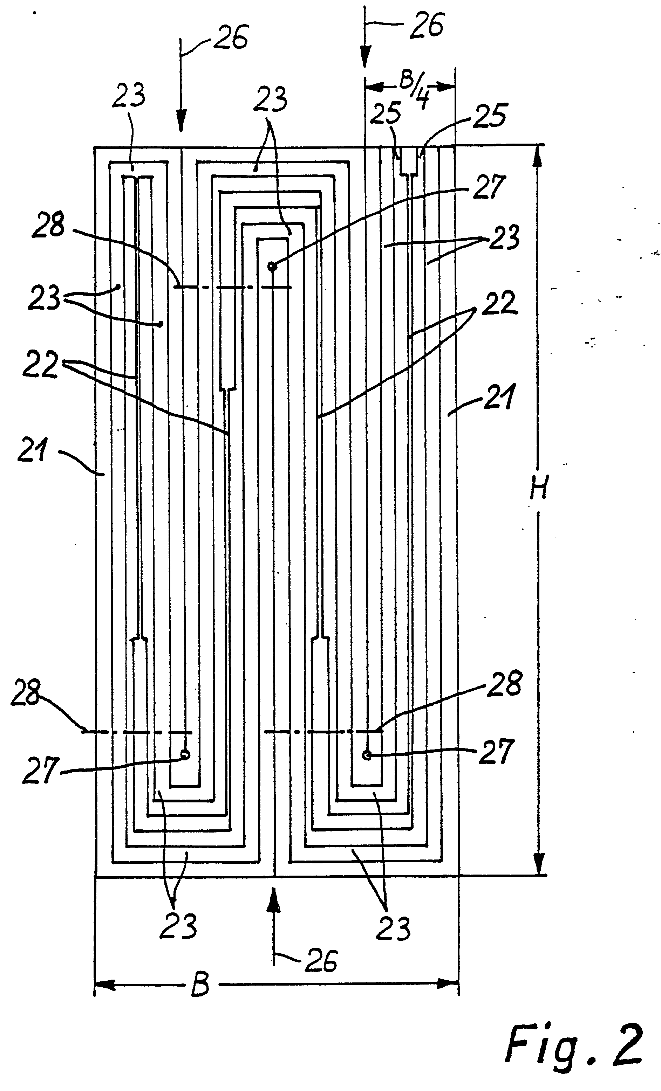

Ein Ausführungsbeispiel der Erfindung ist in der Zeichnung dargestellt und in der nachfolgenden Beschreibung näher erläutert. Es zeigen Figur 1 beispielhaft einen Widerstandsfühler in räumlicher Darstellung, Figur 2 ein ebenes Muster aus Widerstands- und Leiterbahnen als Zwischenprodukt im Herstellungsprozeß.

In Figur 1 ist mit 1 die Trägerfolie bezeichnet, auf die mittels eines der bekannten additiven oder subtraktiven Prozesse Widerstandsleiterbahnen 2 und Stromleiterbahnen 3 aufgebracht sind. Vorteilhaft bestehen die Widerstandsbahnen 2 aus einem Metall oder einer Metallegierung mit großem Widerstandskoeffizienten, während die Leiterbahnen 3 vorzugsweise aus Kupfer oder aus einem anderen Werkstoff guter elektrischer Leitfähigkeit hergestellt sind. In der dargestellten Ausführungsform ist die Widerstandsbahn 2 U-förmig auf der Trägerfolie ausgebildet und beidseitig von den Leiterbahnen 3 flankiert. Die Anschlüsse 4 für die Widerstandsbahn 2 und die Anschlüsse 5 für die beiden Leiterbahnen 3 befinden sich auf einem Schenkel des U-förmigen Bahnenmusters. Dabei hat die Trägerfolie die Breitenausdehnung B und die Höhenausdehnung H.

Zur Gewinnung einer erfindungsgemäßen Einrichtung zum Erfassen der Füllstandshöhe, deren Meßlänge ein Mehrfaches der Ausgangslänge H der Trägerfolie beträgt, ist die Trägerfolie im Innenbereich des U-förmigen Bogens an der mit dem Pfeil 6 bezeichneten Stelle geschlitzt, und zwar so weit, daß das Bahnmuster nicht durchtrennt wird. Anschließend wird der nicht mit den elektrischen Anschlüssen 4, 5 versehene Schenkel der Trägerfolie 1 in Richtung der Ausdehnung H aus der Zeichenebene heraus umgeklappt. Dabei befindet sich die Knicklinie etwa auf der Höhe des Schlitzendes. Auf diese Weise findet die Widerstandsbahn 2 auf dem mit den elektrischen Anschlüssen 4, 5 versehenen Schenkel des U ihre Fortsetzung in der Widerstandsbahn 2 des umgeklappten Schenkels der Trägerfolie. Die beiden Widerstandsbahnen 2 sind zunächst noch seitlich gegeneinander versetzt. Zur Erhöhung der Meßgenauigkeit kann im Bereich der Faltung die Widerstandsbahn 2 durch ein entsprechendes Stück Leiterbahn 3 ersetzt sein, so daß der Beginn der gefalteten Widerstandsbahn mit dem Ende der ungefalteten Widerstandsbahn in einer waagrechten Ebene liegen.

Durch nochmaliges Falten entlang der Pfeile 6 (bzw. 26 in Fig. 2) wird der seitliche Versatz beseitigt. Die beiden Widerstandsbahnen überdecken sich dann und sind um den Betrag zweier Folienstärken gegeneinander versetzt. sie schließen aber in Meßrichtung paßgenau aneinander an.

Das ist Figur gezeigte Bahnenmuster aus Widerstandsbahn und begleitenden Leiterbahnen mäandriert in Richtung der Breitenerstreckung B, mithin liegt die Breite der Mäanderbögen nahe bei der Ausdehnung H. Im gezeigten Beispiel ist mit 21 die Trägerfolie bezeichnet, auf der sich die Widerstandsbahn 22 in vier Mäanderbögen erstreckt, begleitet von Leiterbahnen 23. Die Trägerfolie ist im Bereich der Mäanderbögen in Richtung der Pfeile 26 geschlitzt, und zwar jeweils bis zu den Endpunkten 27.

Zur Herstellung eines Widerstandsfühlers mit mehrfacher Längenausdehnung gegenüber der Höhenerstreckung H der Trägerfolie werden die einzelnen Mäanderbögen bei den mit 28 bezeichnenden Knicklinien aus der Zeichenebene heraus um 180° und anschließend entlang der mit 6 bzw. 26 bezeichneten Trennlinien gefaltet. Dadurch entsteht ein Widerstandsfühler von annähernd dreifacher nutzbarer Länge gegenüber der Abmessung H.

Zur Erhöhung der Meßgenauigkeit ist vorgesehen, faß die Widerstandsbahn beiderseits der Faltlinien 28 in einem solchen Bereich durch Kupferleiterbahnen ersetzt sind, daß nur im Bereich der Faltung die Leiterbahn mit guter elektrischer Leitfähigkeit wirkt und die Enden der Widerstandsbahnen mit dem Beginn der jeweils folgenden Widerstandsbahn im Bereich der waagrechten Wirkungsebene zusammenfallen.

Die elektrischen Anschlüsse 24 für die Widerstandsbahn 22 und 25 für die begleitenden Kupferleiterbahnen 23, sind wider wie in Figur 1 an einem Ende des ersten Mäanderbogens, der dem Schenkel eines U entspricht, angeordnet.

## Ansprüche

1. Einrichtung zum Erfassen der Füllstandshöhe in Flüssigkeitsbehältern mit einem elektrisch beheizten Fühler, dessen füllhöhenabhängige Widerstandsänderung zur Anzeige gebracht wird, der nach Art einer flexiblen Leiterplatte aus einer Trägerfolie und darauf angeordneten mäanderförmigen Widerstandsbahnen ausgebildet ist, dadurch gekennzeichnet, daß eng benachbart zur Widerstandsbahn wenigstens eine Leiterbahn aus einem Werkstoff guter elektrischer Leitfähigkeit angeordnet ist, daß diese Leiterbahn an dem von den Anschlüssen 24, 25 entfernten Ende mit der Widerstandsbahn elektrisch leitend verbunden ist, daß die Trägerfolie im Innenbogen wenigstens eines Mäanders unter Aussparung der Widerstandsbahn und der Leiterbahn geschlitzt ist und wenigstens ein Mäanderbogen quer zur Haupterstreckungsrichtung der Widerstandsbahn um 180° gefaltet ist.

2. Einrichtung nach Anspruch 1, dadruch gekennzeichnet, daß sich die Fließrichtung des Mäanders in Richtung B quer zur späteren Meßrichtung sich erstreckt.

3. Einrichtung nach Anspruch 2, dadurch gekennzeichnet, daß die Meßlänge ein Vielfaches der Länge der einzelnen Mäanderschleifen beträgt.

4. Einrichtung nach einem der Ansprüche 1 bis 3, dadurch gekennzeichnet, daß die Widerstandsbahn im Bereich der Faltung durch ein Stück Leiterbahn aus einem Werkstoff guter elektrischer Leitfähigkeit ersetzt ist.

5. Einrichtung nach Anspruch 4, dadurch gekennzeichnet, daß die Länge der Leiterbahn aus dem Werkstoff guter elektrischer Leitfähigkeit so bemessen ist, daß nach der Faltung die Wirklänge der einzelnen Bereiche der Widerstandsbahn unterbrechungslos aneinander anschließen.

**Fig.1**

*Fig. 2*

**Europäisches Patentamt**

**EUROPÄISCHER RECHERCHENBERICHT**

Nummer der Anmeldung

| EINSCHLÄGIGE DOKUMENTE | | | EP 88106711.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | <u>DE - A1 - 3 108 969</u> (DRALORIC ELECTRONIC)<br><br>* Zusammenfassung; Fig. 1-7 *<br><br>-- | 1,2 | G 01 F 23/22 |
| A | <u>DE - A1 - 3 626 230</u> (VEGLIA  S.A.)<br><br>* Zusammenfassung; Fig. 1,2 *<br><br>-- | 1,2 | |
| A | <u>EP - A1 - 0 140 747</u> (JAEGER)<br><br>* Zusammenfassung; Fig. 1-3 *<br><br>---- | 1,2 | |
| | | | RECHERCHIERTE SACHGEBIETE (Int. Cl.4) |
| | | | G 01 F 23/00 |

Der vorliegende Recherchenbericht wurde für alle Patentansprüche erstellt.

| Recherchenort | Abschlußdatum der Recherche | Prüfer |
|---|---|---|
| WIEN | 24-01-1989 | GRONAU |